# EUROPÄISCHE PATENTSCHRIFT

(11) **EP 2 559 136 B1**
(45) Veröffentlichungstag und Bekanntmachung des Hinweises auf die Patenterteilung: **12.04.2017**
(21) Anmeldenummer: 11703466.0
(22) Anmeldetag: 16.02.2011
(51) Int. Cl.: B60L 11/18, H02P 27/06, H02M 7/483, H01M 10/656, H02J 7/00, H01M 10/625, H01M 10/613, H01M 10/42, H01M 10/0525

(54) **BATTERIE MIT VARIABLER AUSGANGSSPANNUNG**
BATTERY WITH VARIABLE OUTPUT VOLTAGE
BATTERIE À TENSION DE SORTIE VARIABLE

(30) Priorität: 16.04.2010 DE 102010027864
(43) Veröffentlichungstag der Anmeldung: 20.02.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/052283
(87) Internationale Veröffentlichungsnummer: WO 2011/128136

(56) Entgegenhaltungen:
- WO-A2-03/007464
- US-A- 3 100 851
- US-A- 4 680 690

## Beschreibung

Die vorliegende Erfindung betrifft eine Batterie mit variabler Ausgangsspannung.

### Stand der Technik

Es zeichnet sich ab, dass in Zukunft sowohl bei stationären Anwendungen, als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen.

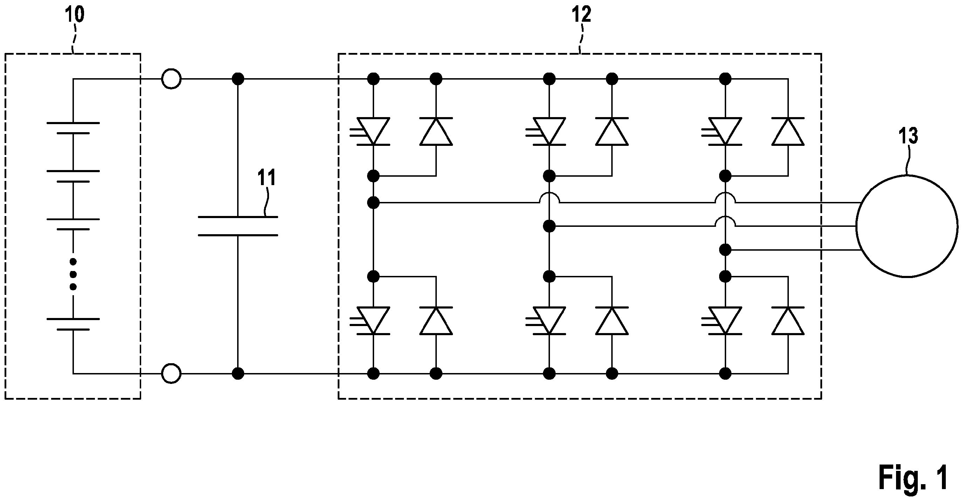

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Fig. 1 dargestellt. Eine Batterie 10 ist an einen Gleichspannungszwischenkreis angeschlossen, welcher durch einen Kondensator 11 gepuffert wird. An den Gleichspannungszwischenkreis angeschlossen ist ein Pulswechselrichter 12, der über jeweils zwei schaltbare Halbleiterventile und zwei Dioden an drei Ausgängen gegeneinander phasenversetzte Sinusspannungen für den Betrieb eines elektrischen Antriebsmotors 13 bereitstellt. Die Kapazität des Kondensators 11 muss groß genug sein, um die Spannung im Gleichspannungszwigenug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF. Wegen der üblicherweise recht hohen Spannung des Gleichspannungszwischenkreises kann eine so große Kapazität nur unter hohen Kosten und mit hohem Raumbedarf realisiert werden.

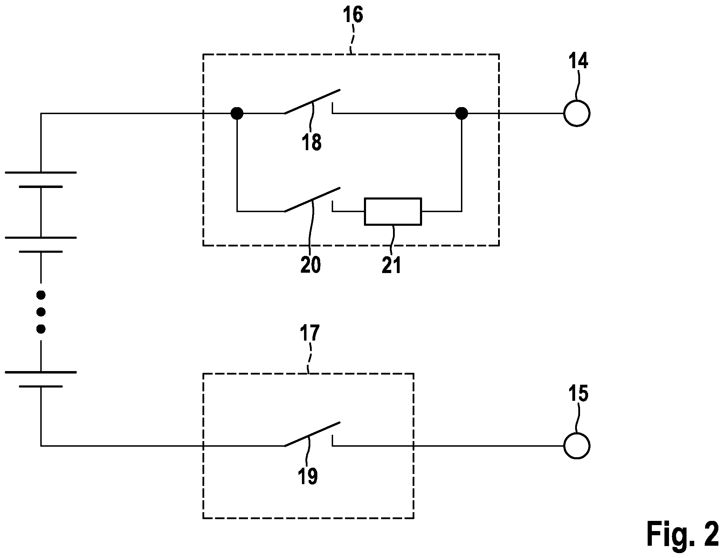

Figur 2 zeigt die Batterie 10 der Figur 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 14 ist eine Lade- und Trenneinrichtung 16 geschaltet. Optional kann zusätzlich zwischen den Minuspol der Batteriezellen und ein negatives Batterieterminal 15 eine Trenneinrichtung 17 geschaltet werden. Die Trenn- und Ladeeinrichtung 16 und die Trenneinrichtung 17 umfassen jeweils ein Schütz 18 beziehungsweise 19, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 16 ist zusätzlich ein Ladeschütz 20 mit einem zu dem Ladeschütz 20 in Serie geschalteten Ladewiderstand 21 vorgesehen. Der Ladewiderstand 21 begrenzt einen Aufladestrom für den Kondensator 11, wenn die Batterie an den Gleichspannungszwischenkreis angeschlossen wird. Hierzu wird zunächst das Schütz 18 offen gelassen und nur das Ladeschütz 20 geschlossen. Erreicht die Spannung am positiven Batterieterminal 14 die Spannung der Batteriezellen, kann das Schütz 19 geschlossen und gegebenenfalls das Ladeschütz 20 geöffnet werden. Die Schütze 18, 19 und das Ladeschütz 20 erhöhen die Kosten für eine Batterie 10 nicht unerheblich, da hohe Anforderungen an ihre Zuverlässigkeit und an die von ihnen zu führenden Ströme gestellt werden.

In den Druckschriften US 3100851 A1 und WO 03/007464 A2 sind Beispiele für bekannte Schaltungsanordnungen angegeben, mit denen aus Batteriegleichspannung ein Wechselstrom erzeugt werden kann. Ferner ist in US 4680690 eine Vorrichtung angegeben, bei der als Gleichspannungsquelle Solarzellenarrays verwendet werden, wobei drei zueinander phasenverschobene Wechselströme erzeugt werden.

### Offenbarung der Erfindung

Erfindungsgemäß wird eine Batterie mit wenigstens einem Batteriemodulstrang und einer Steuereinheit gemäß dem unabhängigen Anspruch 1 offenbart.

Dabei umfasst der erfindungsgemäße Batteriemodulstrang eine Mehrzahl von in Serie geschalteten Batteriemodulen. Jedes Batteriemodul umfasst wenigstens eine Batteriezelle und eine Koppeleinheit. Die wenigstens eine Batteriezelle ist zwischen einen ersten Eingang und einen zweiten Eingang der Koppeleinheit geschaltet. Die Koppeleinheit ist ausgebildet, auf ein erstes Steuersignal hin die wenigstens eine Batteriezelle zwischen ein erstes Terminal des Batteriemoduls und ein zweites Terminal des Batteriemoduls zu schalten und auf ein zweites Steuersignal hin das erste Terminal mit dem zweiten Terminal zu verbinden. Die Steuereinheit ist ausgebildet, das erste Steuersignal an eine erste variable Anzahl von Batteriemodulen des wenigstens einen Batteriemodulsstranges und das zweite Steuersignal an die verbleibenden Batteriemodule des wenigstens einen Batteriemodulstranges auszugeben und so eine Ausgangsspannung des wenigstens einen Batteriemodulstranges der Batterie variabel einzustellen.

Die Koppeleinheit ermöglicht es, eine oder mehrere zwischen den ersten und den zweiten Eingang geschaltete Batteriezellen entweder so an den ersten und den zweiten Ausgang der Koppeleinheit zu koppeln, dass die Spannung der Batteriezellen extern zur Verfügung steht, oder aber die Batteriezellen durch Verbinden des ersten Ausganges mit dem zweiten Ausgang zu überbrücken, so dass eine Spannung von 0 V von außen sichtbar ist.

Auf diese Weise wird es durch geeignete Ansteuerung der Koppeleinheiten der seriengeschalteten Batteriemodule eines Batteriemodulstranges möglich, eine variable Ausgangsspannung des Batteriemodulstranges einzustellen, indem einfach eine entsprechende Anzahl der Batteriemodule aktiviert (Spannung der Batteriezellen am Ausgang der Koppeleinheit sichtbar) oder deaktiviert wird (Ausgangsspannung der Koppeleinheit 0 V).

Die Erfindung bietet die Vorteile, dass so die Funktion des Pulswechselrichters direkt in die Batterie integriert werden kann und ein Pufferkondensator zur Abpufferung eines Gleichspannungszwischenkreises überflüssig wird und eingespart werden kann.

Im Extremfall weist jedes Batteriemodul nur eine Batteriezelle oder ausschließlich eine Parallelschaltung von Batteriezellen auf. In diesem Fall kann die Ausgangsspannung eines Batteriemodulstranges am feinsten eingestellt werden.

thium-Ionen-Batteriezellen eingesetzt, welche eine Zellspannung zwischen 2,5 und 4,2 V besitzen, ließe sich die Ausgangsspannung der Batterie entsprechend genau einstellen. Je genauer die Ausgangsspannung der Batterie einstellbar, desto kleiner wird auch die Problematik der elektromagnetischen Verträglichkeit, weil die durch den Batteriestrom verursachte Abstrahlungen mit dessen hochfrequenten Anteilen sinken. Dem steht jedoch ein erhöhter Schaltungsaufwand gegenüber, welcher aufgrund der Vielzahl von eingesetzten Schaltern auch erhöhte Leistungsverluste in den Schaltern der Koppeleinheiten mit sich bringt.

Die Steuereinheit ist bevorzugt ausgebildet, eine sinusförmige Ausgangsspannung des wenigstens einen Batteriemodulstranges einzustellen. Sinusförmige Ausgangsspannungen erlauben einen direkten Anschluss von Komponenten, welche für den Betrieb an einem Wechselspannungsnetz entworfen wurden.

Vorzugsweise ist die Steuereinheit dabei außerdem dazu ausgebildet, die sinusförmige Ausgangsspannung mit einer einstellbar vorgebbaren Frequenz einzustellen. Die Batterie kann dabei eine Mehrzahl von Batteriemodulsträngen, bevorzugt drei Batteriemodulstränge, aufweisen. Die Steuereinheit ist dabei ausgebildet, für jeden der Batteriemodulstränge eine sinusförmige Ausgangsspannung einzustellen, welche gegenüber den sinusförmigen Ausgangsspannungen der jeweils anderen Batteriemodulstränge phasenversetzt ist. Insbesondere die Ausführungsform mit drei Batteriemodulsträngen erlaubt den direkten Anschluss eines elektrischen Motors ohne weitere Zwischenkomponenten. Ein Antriebssystems eines Elektro- oder Hybridfahrzeuges kann dadurch gegenüber dem im Fig. 1 abgebildeten auf die erfindungsgemäße Batterie und einen elektrischen Antriebsmotor reduziert werden. Es ist jedoch auch vorstellbar, dass ein Elektromotor mehr Eingänge für Phasensignale besitzt, wofür entsprechend Batterien mit mehr Batteriemodulsträngen geeignet wären.

Die Koppeleinheit kann einen ersten Ausgang aufweisen und ausgebildet sein, auf das erste Steuersignal hin entweder den ersten Eingang oder den zweiten Eingang mit dem Ausgang zu verbinden. Der Ausgang ist dabei mit einem der Terminals des Batteriemoduls und einer von erstem oder zweitem Eingang mit dem anderen der Terminals des Batteriemoduls verbunden. Eine solche Koppeleinheit kann mit dem Einsatz von nur zwei Schaltern, bevorzugt Halbleiterschaltern wie MOSFETs oder IGBTs, realisiert werden.

Alternativ kann die Koppeleinheit einen ersten Ausgang und einen zweiten Ausgang aufweisen und ausgebildet sein, auf das erste Steuersignal hin den ersten Eingang mit dem ersten Ausgang und den zweiten Eingang mit dem zweiten Ausgang zu verbinden. Dabei ist die Koppeleinheit außerdem ausgebildet, auf das zweite Steuersignal hin den ersten Eingang vom ersten Ausgang und den zweiten Eingang vom zweiten Ausgang abzutrennen und den ersten Ausgang mit dem zweiten Ausgang zu verbinden. Diese Ausführungsform benötigt einen etwas höheren Schaltungsaufwand (gewöhnlich drei Schalter), koppelt aber die Batteriezellen des Batteriemoduls an dessen beiden Polen ab, so dass bei einer drohenden Tiefentladung oder einer Beschädigung eines Batteriemoduls dessen Batteriezellen spannungsfrei geschaltet und so im fortwährenden Betrieb der Gesamtanordnung gefahrlos ausgetauscht werden können.

Ein zweiter Erfindungsaspekt betrifft ein Kraftfahrzeug mit einem elektrischen Antriebsmotor zum Antreiben des Kraftfahrzeuges und einer mit dem elektrischen Antriebsmotor verbundenen Batterie gemäß dem ersten Erfindungsaspekt.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine erste Ausführung einer Koppeleinheit zum Einsatz in der erfindungsgemäßen Batterie,
Figur 4 eine mögliche schaltungstechnische Umsetzung der ersten Ausführungsform der Koppeleinheit,
Figuren 5A und 5B zwei Ausführungsformen eines Batteriemoduls mit der ersten Ausführungsform der Koppeleinheit,
Figur 6 eine zweite Ausführungsform einer Koppeleinheit zum Einsatz in der erfindungsgemäßen Batterie,
Figur 7 eine mögliche schaltungstechnische Umsetzung der zweiten Ausführungsform der Koppeleinheit,
Figur 8 eine Ausführungsform eines Batteriemoduls mit der zweiten Ausführungsform der Koppeleinheit,
Figur 9 eine erste Ausführungsform der erfindungsgemäßen Batterie,
Figur 10 ein Antriebssystem mit einer weiteren Ausführungsform der erfindungsgemäßen Batterie, und
Figur 11 einen zeitlichen Verlauf einer Ausgangsspannung der erfindungsgemäßen Batterie.

### Ausführungsformen der Erfindung

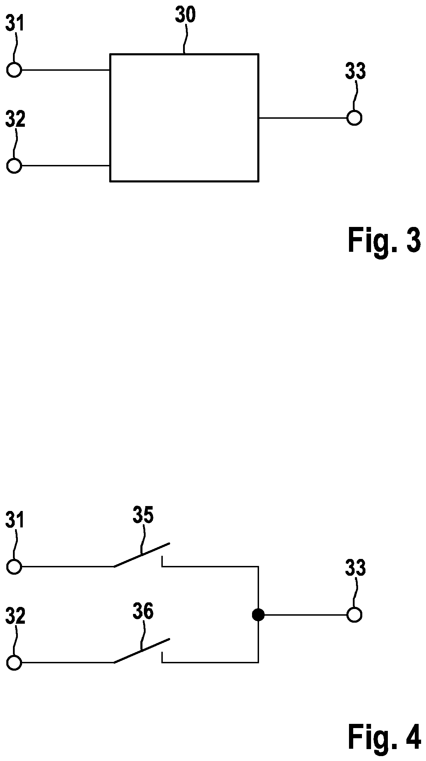

Figur 3 zeigt eine erste Ausführung einer Koppeleinheit 30 zum Einsatz in der erfindungsgemäßen Batterie. Die Koppeleinheit 30 besitzt zwei Eingänge 31 und 32 sowie einen Ausgang 33 und ausgebildet, einen der Eingänge 31 oder 32 mit dem Ausgang 33 zu verbinden und den anderen abzukoppeln.

Figur 4 zeigt eine mögliche schaltungstechnische Umsetzung der ersten Ausführungsform der Koppeleinheit 30, bei der ein erster und ein zweiter Schalter 35 beziehungsweise 36 vorgesehen sind. Jeder der Schalter ist zwischen einen der Eingänge 31 beziehungsweise 32 und den Ausgang 33 geschaltet. Diese Ausführungsform bietet den Vorteil, dass auch beide Eingänge 31, 32 vom Ausgang 33 abgekoppelt werden können, so dass der Ausgang 33 hochohmig wird, was beispielsweise im Fall einer Reparatur oder Wartung nützlich sein kann. Zudem können die Schalter 35, 36 einfach als Halbleiterschalter wie z.B. MOSFETs oder IGBTs verwirklicht werden. Halbleiterschalter haben den Vorteil eines günstigen Preises und einer hohen Schaltgeschwindigkeit, so dass die Koppeleinheit 30 innerhalb einer geringen Zeit auf eine Steuersignal beziehungsweise eine Änderung des Steuersignales reagieren kann und hohe Umschaltraten erreichbar sind. Gegenüber einem gewöhnlichen Pulswechselrichter, welcher eine gewünschte Spannungsform durch entsprechende Wahl eines Tastverhältnisses zwischen maximaler und minimaler Gleichspannung (Pulsweitenmodulation) erzeugt, besitzt die Erfindung jedoch den Vorteil, dass die Schaltfrequenzen der in den Koppeleinheiten Schalter wesentlich niedriger ist, so dass die Elektromagnetische Verträglichkeit (EMV) verbessert wird und geringere Anforderungen an die Schalter gestellt werden können.

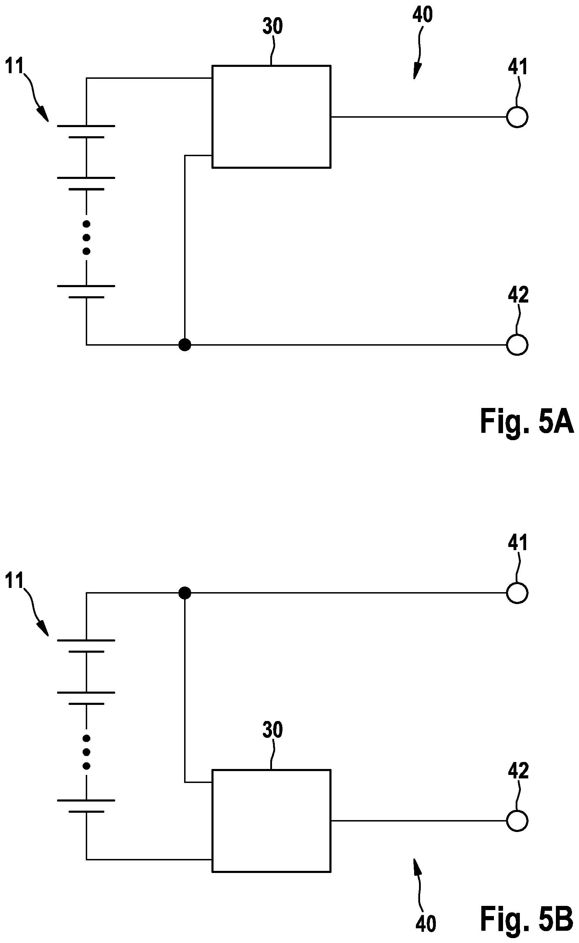

Die Figuren 5A und 5B zeigen zwei Ausführungsformen eines Batteriemoduls 40 mit der ersten Ausführungsform der Koppeleinheit 30. Eine Mehrzahl von Batteriezellen 11 sind zwischen die Eingänge der Koppeleinheit 30 in Serie geschaltet. Die Erfindung ist jedoch nicht auf eine solche Serienschaltung von Batteriezellen 11 beschränkt, es kann auch nur eine einzelne Batteriezelle 11 vorgesehen sein oder aber eine Parallelschaltung oder gemischt-seriell-parallele Schaltung von Batteriezellen 11. Im Beispiel der Figur 5A sind der Ausgang der Koppeleinheit 30 mit einem ersten Terminal 41 und der negative Pol der Batteriezellen 11 mit einem zweiten Terminal 42 verbunden. Es ist jedoch eine beinahe spiegelbildliche Anordnung wie in Figur 5B möglich, bei der der positive Pol der Batteriezellen 11 mit dem ersten Terminal 41 und der Ausgang der Koppeleinheit 30 mit dem zweiten Terminal 42 verbunden sind.

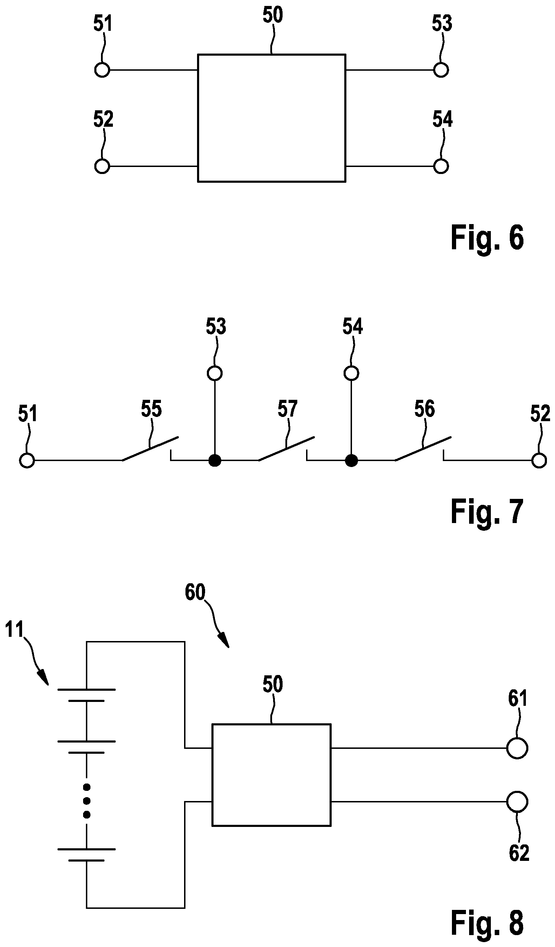

Figur 6 zeigt eine zweite Ausführungsform einer Koppeleinheit 50 zum Einsatz in der erfindungsgemäßen Batterie. Die Koppeleinheit 50 besitzt zwei Eingänge 51 und 52 sowie zwei Ausgänge 53 und 54. Sie ist ausgebildet, entweder den ersten Eingang 51 mit dem ersten Ausgang 53 sowie den zweiten Eingang 52 mit dem zweiten Ausgang 54 zu verbinden (und den ersten Ausgang 53 vom zweiten Ausgang 54 abzukoppeln) oder aber den ersten Ausgang 53 mit dem zweiten Ausgang 54 zu verbinden (und dabei die Eingänge 51 und 52 abzukoppeln). Bei bestimmten Ausführungsformen der Koppeleinheit kann diese außerdem ausgebildet sein, beide Eingänge 51, 52 von den Ausgängen 53, 54 abzutrennen und auch den ersten Ausgang 53 vom zweiten Ausgang 54 abzukoppeln. Nicht vorgesehen ist jedoch, sowohl den ersten Eingang 51 mit dem zweiten Eingang 52 zu verbinden.

Figur 7 zeigt eine mögliche schaltungstechnische Umsetzung der zweiten Ausführungsform der Koppeleinheit 50, bei der ein erster, ein zweiter und ein dritter Schalter 55, 56 und 57 vorgesehen sind. Der erste Schalter 55 ist zwischen den ersten Eingang 51 und den ersten Ausgang 53 geschaltet, der zweite Schalter 56 ist zwischen den zweiten Eingang 52 und den zweiten Ausgang 54 und der dritte Schalter 57 zwischen den ersten Ausgang 53 und den zweiten Ausgang 54 geschaltet. Diese Ausführungsform bietet ebenfalls den Vorteil, dass die Schalter 55, 56 und 57 einfach als Halbleiterschalter wie z.B. MOSFETs oder IGBTs verwirklicht werden können. Halbleiterschalter haben den Vorteil eines günstigen Preises und einer hohen Schaltgeschwindigkeit, so dass die Koppeleinheit 50 innerhalb einer geringen Zeit auf eine Steuersignal beziehungsweise eine Änderung des Steuersignales reagieren kann und hohe Umschaltraten erreichbar sind.

Die Figur 8 zeigt eine Ausführungsform eines Batteriemoduls 60 mit der zweiten Ausführungsform der Koppeleinheit 50. Eine Mehrzahl von Batteriezellen 11 sind zwischen die Eingänge einer Koppeleinheit 50 in Serie geschaltet. Auch diese Ausführungsform des Batteriemoduls 60 ist nicht auf eine solche Serienschaltung von Batteriezellen 11 beschränkt, es kann wiederum auch nur eine einzelne Batteriezelle 11 vorgesehen sein oder aber eine Parallelschaltung oder gemischt-seriell-parallele Schaltung von Batteriezellen 11. Der erste Ausgang der Koppeleinheit 50 ist mit einem ersten Terminal 61 und der zweite Ausgang der Koppeleinheit 40 mit einem zweiten Terminal 62 verbunden. Das Batteriemodul 60 bietet gegenüber dem Batteriemodul 40 der Figuren 5A und 5B den Vorteil, dass die Batteriezellen 11 durch die Koppeleinheit 50 von der restlichen Batterie beidseitig abgekoppelt werden können, was einen gefahrlosen Austausch im laufenden Betrieb ermöglicht, da an keinem Pol der Batteriezellen 11 die gefährliche hohe Summenspannung der restlichen Batteriemodule der Batterie anliegt.

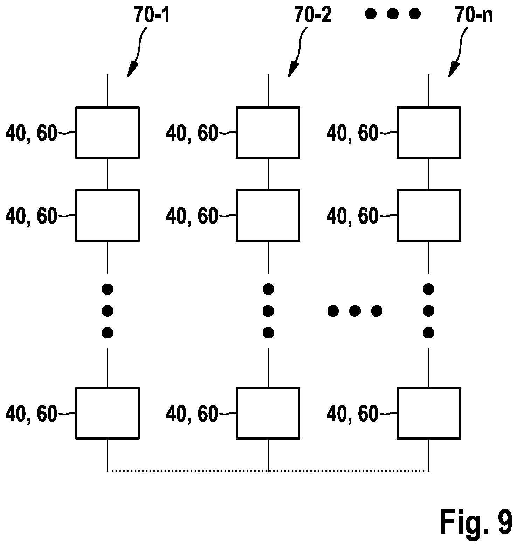

Figur 9 zeigt eine erste Ausführungsform der erfindungsgemäßen Batterie, welche über n Batteriemodulstränge 70-1 bis 70-n verfügt. Jeder Batteriemodulstrang 70-1 bis 70-n weist eine Mehrzahl von Batteriemodulen 40 oder 60 auf, wobei vorzugsweise jeder Batteriemodulstrang 70-1 bis 70-n dieselbe Anzahl von Batteriemodulen 40 oder 60 und jedes Batteriemodul 40 oder 60 dieselbe Anzahl von Batteriezellen 11 in identischer Weise verschaltet enthält. Ein Pol eines jeden Batteriemodulstranges 70-1 bis 70-n kann mit einem entsprechenden Pol der anderen Batteriemodulstränge 70-1 bis 70-n verbunden sein, was durch eine gestrichelte Linie in Figur 9 angedeutet ist. Generell kann ein Batteriemodulstrang 70-1 bis 70-n jede Zahl von Batteriemodulen 40 oder 60 größer 1 und eine Batterie jede Zahl von Batteriemodulsträngen 70-1 bis 70-n enthalten. Auch können an den Polen der Batteriemodulstränge 70-1 bis 70-n zusätzlich Lade- und Trenneinrichtungen und Trenneinrichtungen wie bei Figur 2 vorgesehen sein, wenn Sicherheitsbestimmungen dies erfordern. Allerdings sind solche Trenneinrichtungen erfindungsgemäß nicht notwendig, weil eine Abkopplung der Batteriezellen 11 von den Batterieanschlüssen durch die in den Batteriemodulen 40 oder 60 enthaltenen Koppeleinheiten 30 oder 50 erfolgen kann.

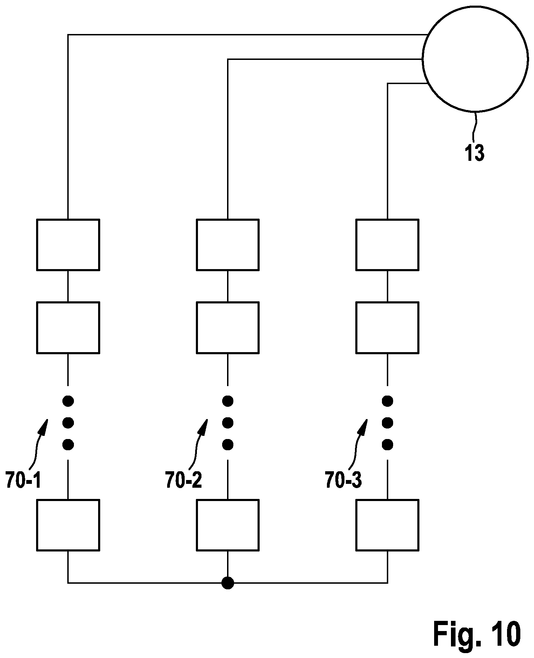

Figur 10 zeigt ein Antriebssystem mit einer weiteren Ausführungsform der erfindungsgemäßen Batterie. Im gezeigten Beispiel besitzt die Batterie drei Batteriemodulstränge 70-1, 70-2 und 70-3, welche jeweils direkt an einen Eingang eines Antriebsmotors 13 angeschlossen sind. Da die meisten verfügbaren Elektromotoren auf einen Betrieb mit drei Phasensignalen ausgelegt sind, besitzt die Batterie der Erfindung bevorzugt genau drei Batteriemodulstränge. Die Batterie der Erfindung besitzt den weiteren Vorzug, dass die Funktionalität eines Pulswechselrichters bereits in die Batterie integriert ist. Indem eine Steuereinheit der Batterie eine variable Anzahl von Batteriemodulen 40 oder 60 eines Batteriemodulstranges aktiviert (beziehungsweise deaktiviert), steht am Ausgang des Batteriemodulstranges eine zu der Anzahl der aktivierten Batteriemodule 40 oder 60 proportionale Spannung, welche zwischen 0V und der vollen Ausgangsspannung des Batteriemodulstranges betragen kann, zur Verfügung.

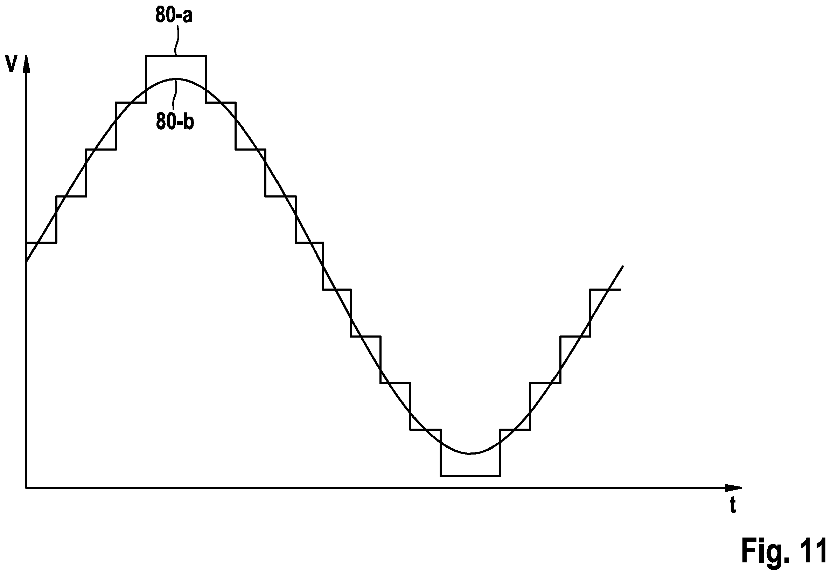

Figur 11 zeigt einen zeitlichen Verlauf einer Ausgangsspannung der erfindungsgemäßen Batterie. Die Ausgangsspannung der Batterie (beziehungsweise eines Batteriemodulstranges) V ist dabei über der Zeit t aufgetragen. Mit dem Bezugszeichen 80-b ist ein für einen beispielhaften Anwendungszweck gewünschter (idealer) Sinus aufgetragen, der jedoch nur Spannungswerte größer oder gleich Null aufweist. Der ideale Sinus wird von der erfindungsgemäßen Batterie durch eine wertdiskrete Spannungskurve 80-a näherungsweise erzeugt. Die Abweichungen der wertdiskreten Spannungskurve 80-a von der idealen Kurve 80-b hängen hinsichtlich ihrer Größe von der Anzahl von Batteriezellen 11 ab, die in einem Batteriemodul 40 oder 60 in Serie geschaltet sind. Je weniger Batteriezellen 11 in einem Batteriemodul 40 oder 60 in Serie geschaltet sind, desto genauer kann die wertdiskrete Spannungskurve 80-a der idealisierten Kurve 80-b folgen. In üblichen Anwendungen beeinträchtigen die verhältnismäßig geringen Abweichungen die Funktion des Gesamtsystems jedoch nicht. Gegenüber einem herkömmlichen Pulswechselrichter, welcher nur eine binäre Ausgangsspannung zur Verfügung stellen kann, welche dann durch die nachfolgenden Schaltungskomponenten gefiltert werden muss, sind die Abweichungen ohnehin deutlich verringert.

Die Erfindung besitzt außer den bereits genannten Vorteilen die Vorteile einer Reduktion der Anzahl von Hochvoltkomponenten, von Steckverbindungen und bietet die Möglichkeit, ein Kühlsystem der Batterie mit dem des Pulswechselrichters zu kombinieren, wobei ein Kühlmittel, das zur Kühlung der Batteriezellen eingesetzt wird, anschließend zur Kühlung der Komponenten des Pulswechselrichters (also der Koppeleinheiten 40 oder 60) eingesetzt werden kann, da diese üblicherweise höhere Betriebstemperaturen erreichen und durch das von den Batteriezellen bereits erwärmte Kühlmittel noch hinreichend gekühlt werden können. Zudem wird es möglich, die Steuereinheiten der Batterie und des Pulswechselrichters zu kombinieren und so weiter Aufwand einzusparen. Die Koppeleinheiten bieten ein integriertes Sicherheitskonzept für Pulswechselrichter und Batterie und erhöhen die Zuverlässigkeit und Verfügbarkeit des Gesamtsystems sowie die Lebensdauer der Batterie.

Ein weiterer Vorteil der Batterie mit integriertem Pulswechselrichter ist, dass sie sehr einfach modular aus einzelnen Batteriemodulen mit integrierter Koppeleinheit aufgebaut werden kann. Dadurch wird die Verwendung von Gleichteilen (Baukastenprinzip) möglich.

## Patentansprüche

1. Eine Batterie mit wenigstens einem Batteriemodulstrang (70) und einer Steuereinheit, wobei der wenigstens eine Batteriemodulstrang (70) eine Mehrzahl von in Serie geschalteten Batteriemodulen (40, 60) umfasst, **dadurch gekennzeichnet, dass** jedes Batteriemodul (40, 60) wenigstens eine Batteriezelle (11), eine Koppeleinheit (30, 50), und ein erstes Terminal (41, 61) und ein zweites Terminal (42, 62) umfasst, wobei die wenigstens eine Batteriezelle (11) zwischen einen ersten Eingang (31, 51) und einen zweiten Eingang (32, 52) der Koppeleinheit (30, 50) angeordnet ist und die Koppeleinheit (30, 50) ausgebildet ist, auf ein erstes Steuersignal hin das Batteriemodul durch ein Schalten der wenigstens eine Batteriezelle (11) zwischen das erste Terminal (41, 61) des Batteriemoduls (40, 60) und das zweite Terminal (42, 62) des Batteriemoduls (40, 60) zu aktivieren, und auf ein zweites Steuersignal hin das Batteriemodul zu deaktivieren, wobei das erste Terminal (41, 61) mit dem zweiten Terminal (42, 62) elektrisch leitend verbunden wird, und wobei die Steuereinheit ausgebildet ist, das erste Steuersignal an eine erste variable Anzahl von Batteriemodulen (40, 60) des wenigstens einen Batteriemodulsstranges (70) und das zweite Steuersignal an die verbleibenden Batteriemodule (40, 60) des wenigstens einen Batteriemodulstranges (70) auszugeben und so eine Ausgangsspannung des wenigstens einen Batteriemodulstranges (70) der Batterie variabel einzustellen, und die Koppeleinheit (30, 50) ausgebildet ist, auf ein Steuersignal hin einen ersten Ausgang (33) der Koppeleinheit (30, 50) von dem ersten Eingang (31, 51) und dem zweiten Eingang (32, 52) abzukoppeln, wodurch die Batterie eine integrierte Pulswechselrichterfunktion aufweist.

2. Die Batterie gemäß Anspruch 1, bei der die Steuereinheit ausgebildet ist, eine sinusförmige Ausgangsspannung des wenigstens einen Batteriemodulstranges (70) einzustellen.

3. Die Batterie gemäß Anspruch 2, bei der die Steuereinheit ausgebildet ist, die sinusförmige Ausgangsspannung mit einer einstellbar vorgebbaren Frequenz einzustellen.

4. Die Batterie gemäß einem der Ansprüche 2 oder 3, welche eine Mehrzahl von Batteriemodulsträngen (70), bevorzugt drei Batteriemodulstränge (70), aufweist, wobei die Steuereinheit ausgebildet ist, für jeden der Batteriemodulstränge (70) eine sinusförmige Ausgangsspannung einzustellen, welche gegenüber den sinusförmigen Ausgangsspannungen der jeweils anderen Batteriemodulstränge (70) phasenversetzt ist.

5. Die Batterie gemäß einem der vorhergehenden Ansprüche, bei der die Koppeleinheit (30) einen ersten Ausgang (33) aufweist und ausgebildet ist, auf das erste Steuersignal hin entweder den ersten Eingang (31) oder den zweiten Eingang (32) mit dem ersten Ausgang (33) zu verbinden.

6. Die Batterie gemäß einem der Ansprüche 1 bis 4, bei der die Koppeleinheit (50) einen ersten Ausgang (53) und einen zweiten Ausgang (54) aufweist und ausgebildet ist, auf das erste Steuersignal hin den ersten Eingang (51) mit dem ersten Ausgang (53) und den zweiten Eingang (52) mit dem zweiten Ausgang (54) zu verbinden und auf das zweite Steuersignal hin den ersten Eingang (51) vom ersten Ausgang (53) und den zweiten Eingang (52) vom zweiten Ausgang (54) abzutrennen und den ersten Ausgang (53) mit dem zweiten Ausgang (54) zu verbinden und die Koppeleinheit (50) ausgebildet ist, auf ein Steuersignal hin den ersten Eingang (51) der Koppeleinheit (50) von dem ersten Ausgang (53) und den zweiten Eingang (52) der Koppeleinheit (50) von dem zweiten Ausgang (54) abzukoppeln und den ersten Ausgang (53) von dem zweiten Ausgang (54) abzutrennen.

7. Ein Kraftfahrzeug mit einem elektrischen Antriebsmotor (13) zum Antreiben des Kraftfahrzeuges und einer mit dem elektrischen Antriebsmotor (13) verbundenen Batterie gemäß einem der vorhergehenden Ansprüche.

## Claims

1. Battery comprising at least one battery module line (70) and a control unit, in which the minimum of one battery module line (70) comprises a plurality of series-connected battery modules (40, 60), **characterized in that** each battery module (40, 60) comprises at least one battery cell (11), a coupling unit (30, 50) and a first terminal (41, 61) and a second terminal (42, 62), wherein the minimum of one battery cell (11) is arranged between a first input (31, 51) and a second input (32, 52) of the coupling unit (30, 50), and the coupling unit (30, 50) is designed to activate the battery module by switching the minimum of one battery cell (11) between the first terminal (41, 61) of the battery module (40, 60) and the second terminal (42, 62) of the battery module (40, 60) in response to a first control signal, and to deactivate the battery module in response to a second control signal, wherein the first terminal (41, 61) is electrically conductively connected to the second terminal (42, 62), and wherein the control unit is designed to transmit the first control signal to a first variable number of battery modules (40, 60) in the minimum of one battery module line (70) and the second control signal to the remaining battery modules (40, 60) in the minimum of one battery module line (70), thereby allowing the variable regulation of the output voltage of the minimum of one battery module line (70) of the battery, and the coupling unit (30, 50) is designed to uncouple a first output (33) of the coupling unit (30, 50) from the first input (31, 51) and the second input (32, 52) in response to a control signal, as a result of which the battery has an integrated pulse-controlled inverter function.

2. Battery according to Claim 1, in which the control unit is designed for the adjustment of a sinusoidal output voltage of the minimum of one battery module line (70).

3. Battery according to Claim 2, in which the control unit is designed for the adjustment of the sinusoidal output voltage to an adjustable and preselectable frequency.

4. Battery according to one of Claims 2 or 3, comprised of multiple battery module lines (70), preferably three battery module lines (70), wherein, for each battery module line (70), the control unit is designed for the setting of a sinusoidal output voltage which is phase-displaced in relation to the sinusoidal output voltages of the other battery module lines (70).

5. Battery according to one of the above claims, in which the coupling unit (30) is provided with a first output (33) and is designed, in response to the first control signal, to connect either the first input (31) or the second input (32) to the first output (33).

6. Battery according to one of Claims 1 - 4, in which the coupling unit (50) is provided with a first output (53) and a second output (54) and is designed such that, in response to the first control signal, the first input (51) is connected to the first output (53) and the second input (52) is connected to the second output (54) and, in response to the second control signal, the first input (51) is disconnected from the first output (53), the second input (52) is disconnected from the second output (54), and the first output (53) is connected to the second output (54), and the coupling unit (50) is designed to uncouple the first input (51) of the coupling unit (50) from the first output (53) and to uncouple the second input (52) of the coupling unit (50) from the second output (54) and to disconnect the first output (53) from the second output (54) in response to a control signal.

7. Motor vehicle with an electric drive motor (13) for the propulsion of the motor vehicle, and a battery according to one of the above claims which is connected to the electric drive motor (13).

## Revendications

1. Batterie comprenant au moins une branche de modules de batterie (70) et une unité de commande, l'au moins une branche de modules de batterie (70) comprenant une pluralité de modules de batterie (40, 60) branchés en série, **caractérisée en ce que** chaque module de batterie (40, 60) comprend au moins une cellule de batterie (11), une unité de connexion (30, 50) et une première borne (41, 61) et une deuxième borne (42, 62), l'au moins une cellule de batterie (11) étant disposée entre une première entrée (31, 51) et une deuxième entrée (32, 52) de l'unité de connexion (30, 50) et l'unité de connexion (30, 50) étant configurée pour, en présence d'un premier signal de commande, activer le module de batterie par une commutation de l'au moins une cellule de batterie (11) entre la première borne (41, 61) du module de batterie (40, 60) et la deuxième borne (42, 62) du module de batterie (40, 60) et, en présence d'un deuxième signal de commande, désactiver le module de batterie, la première borne (41, 61) étant reliée de manière électriquement conductrice à la deuxième borne (42, 62), et l'unité de commande étant configurée pour délivrer le premier signal de commande à un premier nombre variable de modules de batterie (40, 60) de l'au moins une branche de modules de batterie (70) et le deuxième signal de commande aux modules de batterie (40, 60) restants de l'au moins une branche de modules de batterie (70) et régler ainsi de manière variable une tension de sortie de l'au moins une branche de modules de batterie (70), et l'unité de connexion (30, 50) étant configurée pour, en présence d'un signal de commande, déconnecter une première sortie (33) de l'unité de connexion (30, 50) de la première entrée (31, 51) et de la deuxième entrée (32, 52), la batterie possédant ainsi une fonction intégrée d'onduleur à impulsions.

2. Batterie selon la revendication 1, dans laquelle l'unité de commande est configurée pour régler une tension de sortie sinusoïdale de l'au moins une branche de modules de batterie (70).

3. Batterie selon la revendication 2, dans laquelle l'unité de commande est configurée pour régler la tension de sortie sinusoïdale avec une fréquence réglable pouvant être prédéfinie.

4. Batterie selon l'une des revendications 2 ou 3, laquelle possède une pluralité de branches de modules de batterie (70), de préférence trois branches de modules de batterie (70), l'unité de commande étant configurée pour régler une tension de sortie sinusoïdale pour chacune des branches de modules de batterie (70), laquelle est déphasée par rapport aux tensions de sortie sinusoïdales des autres branches de modules de batterie (70) respectives.

5. Batterie selon l'une des revendications précédentes, dans laquelle l'unité de connexion (30) possède une première sortie (33) et est configurée pour, en présence du premier signal de commande, relier soit la première entrée (31), soit la deuxième entrée (32), avec la première sortie (33).

6. Batterie selon l'une des revendications 1 à 4, dans laquelle l'unité de connexion (50) possède une première entrée (53) et une deuxième entrée (54) et est configurée pour, en présence du premier signal de commande, relier la première entrée (51) avec la première sortie (53) et la deuxième entrée (52) avec la deuxième sortie (54) et, en présence du deuxième signal de commande, déconnecter la première entrée (51) de la première sortie (53) et la deuxième entrée (52) de la deuxième sortie (54) puis connecter la première sortie (53) avec la deuxième sortie (54) et l'unité de connexion (50) est configurée pour, en présence d'un signal de commande, déconnecter la première entrée (51) de l'unité de connexion (50) de la première sortie (53) et la deuxième entrée (52) de l'unité de connexion (50) de la deuxième sortie (54) et pour déconnecter la première sortie (53) de la deuxième sortie (54).

7. Véhicule automobile équipé d'un moteur de propulsion (13) électrique destiné à propulser le véhicule automobile et d'une batterie selon l'une des revendications précédentes reliée au moteur de propulsion (13) électrique.
